# EUROPEAN PATENT APPLICATION

(11) **EP 2 055 984 A2**
(43) Date of publication of application: **06.05.2009**
(21) Application number: 08253491.8
(22) Date of filing: 27.10.2008
(51) Int. Cl.: F16F 9/06, F16F 9/44

(54) **Vehicle**

(30) Priority: 30.10.2007 JP 2007281225
(71) Applicant: Yamaha Hatsudoki Kabushiki Kaisha, Iwata-shi, Shizuoka 438-8501 (JP)
(72) Inventor: Kamioka, Takamasa, Shizuoka-ken, 438-8501 (JP)
(74) Representative: Harris, Ian Richard

(57) **Abstract**

A vehicle comprising a suspension unit having a reduced space requirement for arrangement in a body. A vehicle (e.g., a motorcycle) 1 includes a rear suspension 16, which is provided between a body (2 to 5) and a rear wheel 15 and which absorbs a shock in a relative movement of the body (2 to 5) and the rear wheel 15. Further, the rear suspension 16 includes a cylinder portion 22 whose inside is filled with air and an outer cylinder portion 42, which is directly mounted to the cylinder portion 22 and arranged so that its volume can be adjusted.

## Description

### Technical Field

The invention relates to a vehicle, particularly, a vehicle comprising a suspension unit.

### Background Art

A buffer aseismatic unit (a suspension unit) whose inside is filled with air has been conventionally known (refer to JP-A-2002-242976, for example). JP-A-2002-242976 discloses a buffer aseismatic unit comprising an outer tube (a first cylinder portion) filled with air, a tube (a second cylinder portion) arranged to be able to adjust its inside pressure and a hose-shaped air tube for connecting the outer tube and the tube.

In the buffer aseismatic unit disclosed in JP-A-2002-242976, however, the tube (the second cylinder portion) is connected to the outer tube (the first cylinder portion) through the hose-shaped air tube. Accordingly, it can be considered that not only a portion for mounting the outer tube to a body of the vehicle but also a portion for mounting the tube (the second cylinder portion) should be provided in fixing the tube to the body against vibration in running and such. This causes a requirement of providing both of a mounting portion for the outer tube and a mounting portion for the tube in the body where a buffer aseismatic unit is placed, and thereby, a problem that a large space corresponding to the mounting portions is required, in the case of the buffer aseismatic unit of JP-A-2002-242976.

The invention seeks to provide a vehicle comprising a suspension unit with a reduced space requirement.

### Summary

A vehicle in accordance with an aspect of the invention comprises: a body; a wheel; and a suspension unit provided between the body and the wheel for absorbing a shock in relative movement of the body and the wheel, wherein the suspension unit includes a first cylinder portion filled with air and a second cylinder portion directly mounted to the first cylinder portion, the second cylinder portion being arranged so that the volume thereof would be adjustable.

In such a vehicle, the suspension unit is provided with the first cylinder portion filled with air and the second cylinder portion directly mounted to the first cylinder portion, the second cylinder portion being arranged so that the volume thereof can be adjustable, as described above. This allows the second cylinder portion to be firmly fixed to the first cylinder portion, so that no mounting portion for mounting the second cylinder portion to the body need be provided. This means that the space needed for arrangement of the suspension unit in the body can be small.

### Brief Description of the Drawings

Embodiments of the invention will be described hereinafter, by way of example only, with reference to the drawings.
Fig. 1 is a side view of a whole structure of a motorcycle of a first embodiment of the invention.
Fig. 2 illustrates in detail a structure of a rear suspension and its periphery of the motorcycle of the first embodiment shown in Fig. 1.
Fig. 3 illustrates in detail a structure of a rear suspension of the motorcycle of the first embodiment shown in Fig. 1.
Fig. 4 illustrates in detail a structure of a rear suspension of the motorcycle of the first embodiment shown in Fig. 1.
Fig. 5 illustrates in detail a structure of a check valve and its periphery of a rear suspension of the motorcycle of the first embodiment shown in Fig. 1.
Fig. 6 illustrates in detail a structure of a release valve and its periphery of a rear suspension of the motorcycle of the first embodiment shown in Fig. 1.
Fig. 7 illustrates in detail a structure of a rear suspension of the motorcycle of the first embodiment shown in Fig. 1.
Fig. 8 is a graph for illustrating an extension and contraction characteristic of a rear suspension of the motorcycle of the first embodiment shown in Fig. 1.
Fig. 9 illustrates in detail a structure of a rear suspension of a motorcycle of a second embodiment of the invention.
Fig. 10 illustrates in detail a structure of a rear suspension of a motorcycle of a second embodiment of the invention.
Fig. 11 illustrates in detail a structure of a rear suspension of a motorcycle of a second embodiment of the invention.
Fig. 12 illustrates in detail a structure of a rear suspension of a motorcycle of a third embodiment of the invention.
Fig. 13 illustrates in detail a structure of a rear suspension of a motorcycle of a third embodiment of the invention.
Fig. 14 is a graph for illustrating an extension and contraction characteristic of a rear suspension of a motorcycle of a third embodiment of the invention.
Fig. 15 illustrates in detail a structure of a rear suspension of a motorcycle of a fourth embodiment of the invention.
Fig. 16 illustrates in detail a structure of a rear suspension of a motorcycle of a fourth embodiment of the invention.
Fig. 17 illustrates in detail a structure of a sub tank unit of a motorcycle of a first modification of the invention.
Fig. 18 illustrates in detail a mounting structure of a piston portion of a rear suspension to a rod portion in a motorcycle of a second modification of the invention.

### Detailed description

Embodiments of the invention will be described hereinafter on the basis of the drawings.

### First Embodiment

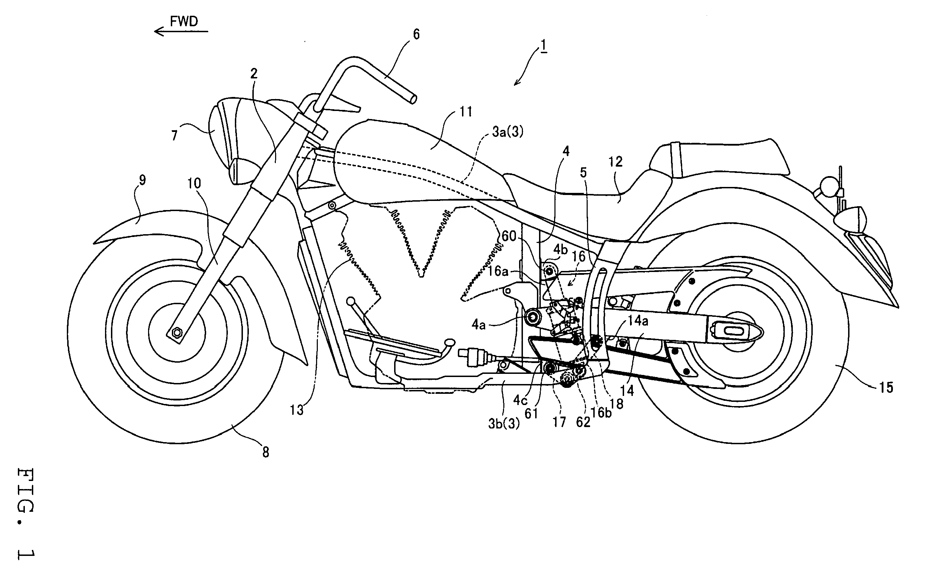

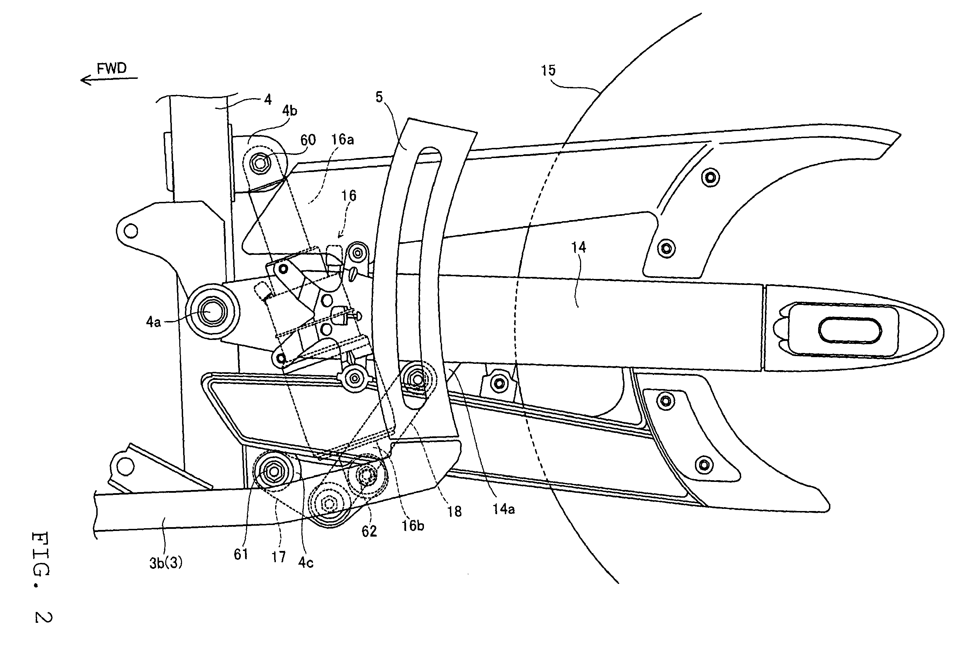

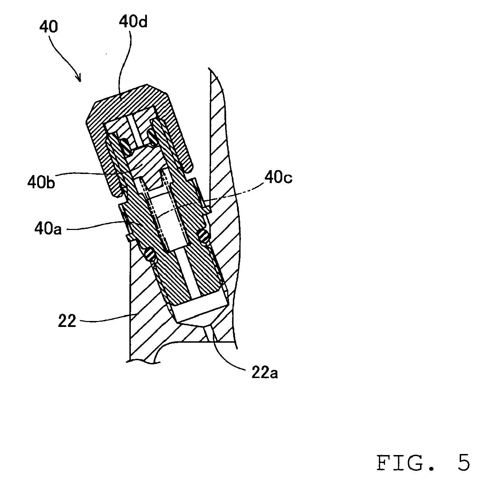

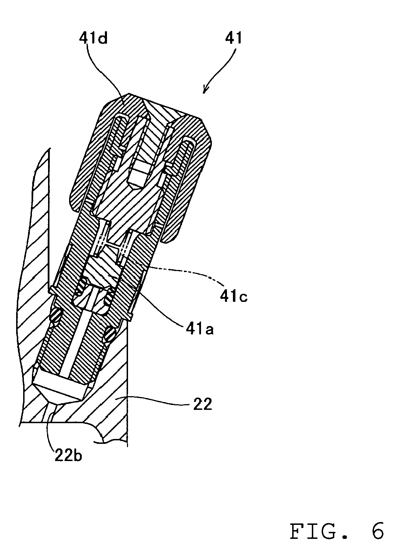

Fig. 1 is a side view of a whole structure of a motorcycle in accordance with a first embodiment of the invention. Figs. 2 to 7 illustrate in detail a structure of a rear suspension of the motorcycle in accordance with the first embodiment, which is shown in Fig. 1. In the first embodiment, a motorcycle is described as an example of a vehicle in accordance with the invention. A forward (FWD) direction in the drawings is a forward direction in running of the motorcycle. Now, a structure of a motorcycle 1 in accordance with the first embodiment of the invention is described in detail with reference to Figs. 1 to 7.

In the motorcycle 1 in accordance with the first embodiment, provided behind a head pipe 2 is a main frame 3 extending in the back and forth direction, as shown in Fig. 1. The main frame 3 includes an upper frame part 3a extending from the upper side to the rear side and a lower frame part 3b extending from the lower side to the rear side. The rear side of the upper frame part 3a and the rear side of the lower frame part 3b are connected by means of a pivot shaft holding member 4 and a connecting member 5. The head pipe 2, the main frame 3, the pivot shaft holding member 4 and the connecting member 5 form a body frame. The head pipe 2, the main frame 3, the pivot shaft holding member 4 and the connecting member 5 form an example of a "body".

A handle 6 is mounted to an upper part of the head pipe 2. In front of the head pipe 2, provided is a front light 7. Under the head pipe 2, provided are a front wheel 8 and a front fender 9 provided above the front wheel 8. The front wheel 8 is rotatably mounted to a lower part of a pair of front forks 10. The front forks 10 have a function of absorbing a shock in relative movement of the front wheel 8 and the body.

A fuel tank 11 is provided in an upper part of the upper frame part 3a of the main frame 3. A seat 12 is provided behind the fuel tank 11. Under the upper frame part 3a of the main frame 3, provided is an engine 13. The pivot shaft holding member 4 is provided with a pivot shaft 4a, as shown in Fig. 2. A front end part of a rear arm 14 is held on the pivot shaft 4a so as to be vertically swingable. To a rear end part of the rear arm 14, rotatably mounted is a rear wheel 15. The rear wheel 15 is an example of a "wheel".

A holding portion 4b is provided at a rear part of the pivot shaft holding member 4. An upper mounting portion 16a of a rear suspension 16 is mounted to the holding portion 4b by means of a screw 60. The rear suspension 16 is an example of a "suspension unit". A holding portion 4c is provided at a lower rear part of the pivot shaft holding member 4. A swing member 17 is mounted to the holding portion 4c by means of a screw 61 so as to be swingable. A lower mounting portion 16b of the rear suspension 16 is mounted to the swing member 17 by means of a screw 62. The swing member 17 is connected to a holding part 14a of the rear arm 14 by means of the connecting member 18. This allows the swing member 17 to swing on the holding portion 4c of the pivot shaft holding member 4 in accordance with vertical swing of the rear arm 14, so that the rear suspension 16 can be extended and contracted.

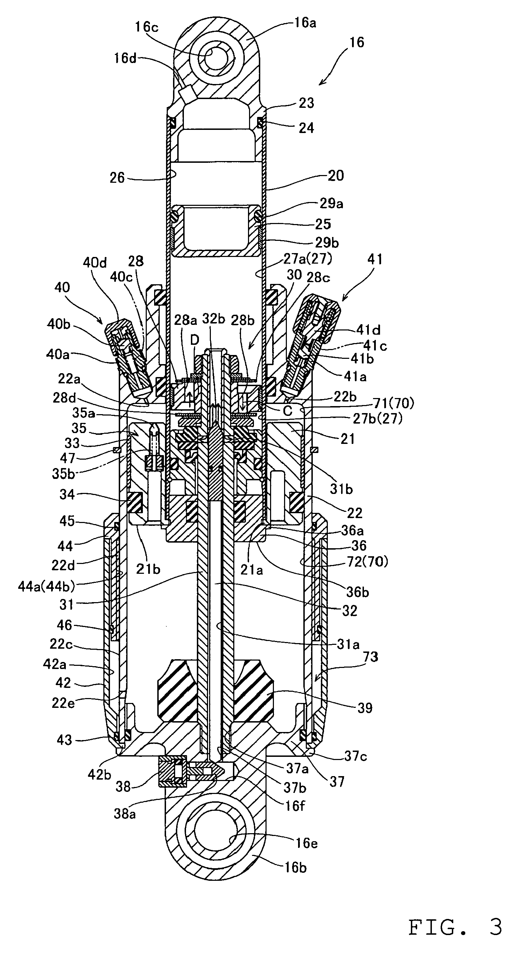

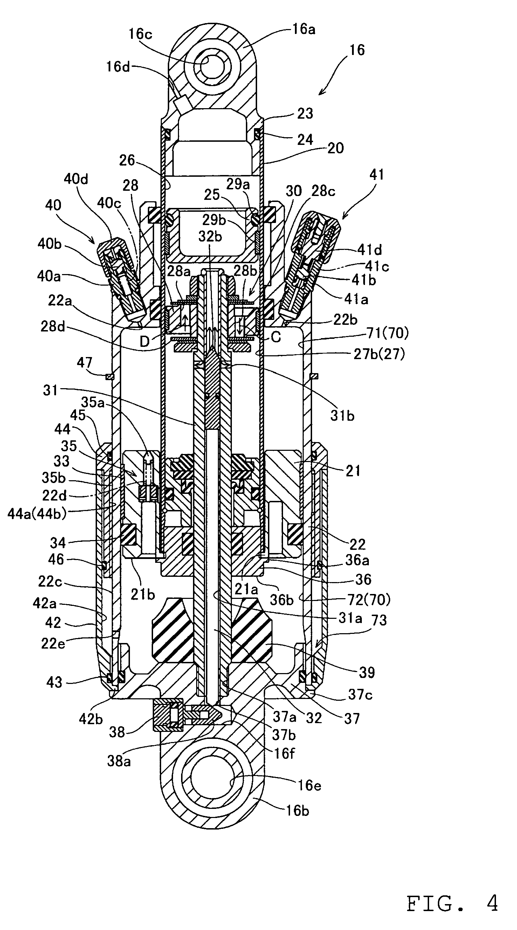

The rear suspension 16 includes a cylindrical rod portion 20 fixed on an upper mounting portion 16a side, a piston portion 21 arranged to divide an after-mentioned inner gas chamber 70 into an upper gas chamber 71 and a lower gas chamber 72, and a cylinder portion 22, which is fixed on a lower mounting portion 16b side and in which the rod portion 20 and the piston portion 21 are provided, as shown in Figs. 3 and 4. The rod portion 20 is an example of a "shaft portion". The piston portion 21 is an example a "first piston portion". The cylinder portion 22 is an example of a "first cylinder portion".

An upper lid body 23 is fixed to an upper end of the rod portion 20 so as to close an opening on the upper side of the rod portion 20. A sealing member 24 formed from a rubber O-ring is provided between an inner circumferential surface of the rod portion 20 and an outer circumferential surface of the upper lid body 23. At an upper part of the upper lid body 23, provided into one body is the upper mounting portion 16a. The upper mounting portion 16a is provided with a through hole 16c. The through hole 16c is arranged so that the screw 60 (refer to Fig. 2) would be inserted into the through hole. The upper mounting portion 16a is mounted to the holding portion 4b (refer to Fig. 2) of the pivot shaft holding member 4 by means of the screw 60. Further, on the upper mounting portion 16a side of the upper lid body 23, formed is a gas injection portion 16d arranged so that air can be filled in an after-mentioned inner gas chamber 26.

A free piston portion 25 is provided inside the rod portion 20. The inside of the rod portion 20 is divided into the inner gas chamber 26, which is provided on an upper side of the free piston portion 25 and in which air is filled, and an oil chamber 27, which is provided on a lower side of the free piston portion 25 and in which oil is filled. In the oil chamber 27, provided is a piston portion 28. The inside of the oil chamber 27 is divided by means of the piston portion 28 into an upper oil chamber 27a provided on an upper side of the piston portion 28 and a lower oil chamber 27b provided on a lower side of the piston portion 28. The piston portion 28 is an example of a "second piston portion".

Between an outer circumferential surface of the free piston portion 25 and the inner circumferential surface of the rod portion 20, provided are a sealing member 29a formed from a rubber O-ring and a metal or resin slide metal 29b processed so that resistance of a slide surface would be small. The free piston portion 25 is arranged to be movable in an axial direction of the rod portion 20 along the inner circumferential surface of the rod portion 20.

Further, in the piston portion 28, formed are plural orifices 28a and 28b for letting oil pass therethrough. The plural orifices 28a have a function of letting the oil in the lower oil chamber 27b on a lower side of the piston portion 28 pass therethrough to the upper oil chamber 27a on an upper side of the piston portion 28 while the plural orifices 28b have a function of letting the oil in the upper oil chamber 27a pass therethrough to the lower oil chamber 27b on the lower side of the piston portion 28. Above the plural orifices 28a and 28b, provided are plural plate-shaped washers 28c so as to close upper surfaces of the orifices 28a and open upper surfaces of the orifices 28b. Moreover, under the plural orifices 28a and 28b, provided are plural plate-shaped washers 28d so as to open lower surfaces of the orifices 28a and close lower surfaces of the orifices 28b.

The orifices 28a, the orifices 28b, the washers 28c and the washers 28d form an attenuation mechanism portion 30. Arranging the orifices 28a, the orifices 28b, the washers 28c and the washers 28d as described above allows force in expansion or contraction of the rear suspension 16 to be attenuated.

The piston portion 28 is fixed to a rod portion 31 fixed to an insertion hole 37a of an after-mentioned lower lid body 37. This allows an outer circumferential surface of the piston portion 28 to move in the axial direction of the rod portion 20 along the inner circumferential surface of the rod portion 20.

The rod portion 31 is provided with a through hole 31a passing through the rod portion 31 along a direction that the rod portion 31 extends. Under a part of the rod portion 31 where the attenuation mechanism portion 30 is provided, formed is an adjusting hole portion 31b formed orthogonally to the through hole 31a. The through hole 31a and the adjusting hole portion 31b are arranged so that the oil in the upper oil chamber 27a can flow into the lower oil chamber 27b in contraction of the rear suspension 16 while the oil in the lower oil chamber 27b can flow into the upper oil chamber 27a in expansion of the rear suspension 16. This allows not only the attenuation mechanism portion 30 but also the through hole 31a and the adjusting hole portion 31b to attenuate the force in expansion or contraction of the rear suspension 16.

A rod member 32 is provided in the through hole 31a slidably along an inner circumferential surface of the through hole 31a. An upper end part 32b of the rod member 32 is formed into a taper shape. Moving the rod member 32 along the through hole 31a allows intervals between the oil flow paths formed between the through hole 31a and the adjusting hole portion 31b and the upper end portion 32b to be adjustable. That is to say, the rear suspension 16 in accordance with the first embodiment is arranged to be able to adjust the attenuation force.

The piston portion 21 is mounted to the lower part of the rod portion 20. The piston portion 21 is arranged to be slidable along an inner circumferential surface of the cylinder portion 22. The piston portion 21 has a function of dividing the inner gas chamber 70 provided inside the cylinder portion 22 into the upper gas chamber 71 on the upper side of the piston portion 21 and the lower gas chamber 72 on the lower side of the piston portion 21. That is to say, the upper gas chamber 71 is provided in an area enclosed by an inner surface of the cylinder portion 22, an outer surface of the rod portion 20, the piston portion 21 and such while the lower gas chamber 72 is provided in an area enclosed by the inner surface of the cylinder portion 22, the piston portion 21 and the after-mentioned lower lid body 37. The upper gas chamber 71 is an example of a "first gas chamber". The lower gas chamber 72 is an example of a "second gas chamber". The upper gas chamber 71 is arranged so that air would be compressed in extension of the rear suspension 16 (in a state in Fig. 3) while air would be expanded in contraction of the rear suspension 16 (in a state in Fig. 4). The lower gas chamber 72 is arranged so that air would be expanded in extension of the rear suspension 16 while air would be compressed in contraction of the rear suspension 16.

A slide metal 33 is mounted between an outer circumferential surface of the piston portion 21 and an inner circumferential surface of the cylinder portion 22. This allows the piston portion 21 to easily move in an axial direction of the cylinder portion 22 along the inner circumferential surface of the cylinder portion 22. Further, a rubber sealing material 34 is provided under the slide metal 33 between the outer circumferential surface of the piston portion 21 and the inner circumferential surface of the cylinder portion 22. The sealing material 34 allows the air in the lower gas chamber 72 to be prevented from leaking (moving) to the upper gas chamber 71.

The piston portion 21 is provided with an air adjusting valve 35 arranged to connect the upper gas chamber 71 and the lower gas chamber 72 in the first embodiment. The air adjusting valve 35 is an example of a "third air pressure adjusting valve". The air adjusting valve 35 comprises a valve member 35a and a compression coil spring 35b for pressuring the valve member 35a toward the upper gas chamber 71. The air adjusting valve 35 is arranged to open the valve member 35a toward the lower gas chamber 72 to supply the lower gas chamber 72 with air from the upper gas chamber 71 in the case that the air pressure of the lower gas chamber 72 is smaller than the air pressure of the upper gas chamber 71.

The piston portion 21 is held and fixed between a lower end part of the rod portion 20 and a lid body 36 closing an opening on a lower side of the rod portion 20. In this example, a flange portion 36a is provided in an outer circumferential part of the lid body 36 while an annular convex portion 21a is formed in the inner circumferential surface of the piston portion 21. The convex portion 21a of the piston portion 21 is held between the lower end part of the rod portion 20 and the flange portion 36a of the lid body 36 while the outer circumferential part of the lid body 36 is screwed in the inner circumferential surface of the rod portion 20 in the vicinity of the lower end part. The lid body 36 is an example of a "mounting portion". The end part 21b of the piston portion 21 on the lower gas chamber 72 side is arranged to be located closer to the upper gas chamber 71 than the end part 36b of the lid body 36 on the lower gas chamber 72 side in the first embodiment.

To a lower end part of the cylinder portion 22, fixed is the lower lid body 37 so as to close an opening on the lower side of the cylinder portion 22. The lower mounting portion 16b is provided in the lower lid body 37 into one body with the lower lid body 37. The lower mounting portion 16b is provided with an insertion hole 16e into which the screw 62 (refer to Fig. 2) is inserted so that the lower mounting portion 16b would be mounted to the swing member 17 (refer to Fig. 2). In an upper surface of the lower lid member 37, formed is an insertion hole 37a. A screw portion of an inner surface of the insertion hole 37a is screwed in a screw portion of a lower part of the rod portion 31. At a lower end part of the insertion hole 37a, formed is a hole portion 37b where a lower part of the rod member 32 can be provided. The hole portion 37b is connected to an insertion hole 16f formed on a side of the lower mounting portion 16b.

A rod member adjusting member 38 is provided in the insertion hole 16f. A top end portion 38a of the rod member adjusting member 38 is tapered. It is arranged that moving the rod member adjusting member 38 along a direction that the insertion hole 16f extends allow the rod member 32 to move in the vertical direction. This enables intervals between the oil flowing paths formed between the through hole 31a and the adjusting hole portion 31b and the upper end part 32b to be adjusted in accordance with the movement of the rod member 32 in the vertical direction. This results in achievement of adjustment of the attenuation force of the rear suspension 16.

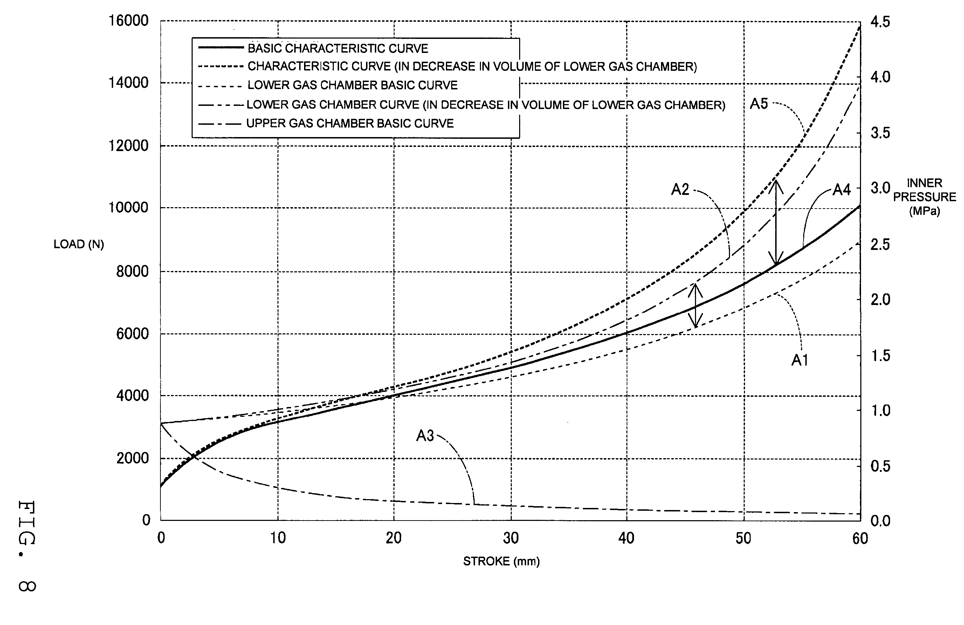

Further, a cushion rubber 39 is mounted to a lower part of the rod portion 31. An upper surface of the cushion rubber 39 is arranged so as to be in contact with an end part 36b of the lid body 36 on the lower gas chamber 72 side in contraction of the rear suspension 16 (in a state in Fig. 8). This allows the lid body 36 to be prevented from directly contacting with the lower lid body 37 in contraction of the rear suspension 16.

At an upper part of the upper gas chamber 71 of the cylinder portion 22, provided are an air passage part 22a for taking air into the upper gas chamber 71 from the outside of the rear suspension 16 and an air passage part 22b for exhausting air from the upper gas chamber 71 to the outside of the rear suspension 16, in the first embodiment.

Further, in the first embodiment, provided in the air passage part 22a is a check valve 40 arranged to take air into the upper gas chamber 71 from the outside of the rear suspension 16 in the case that the air pressure of the upper gas chamber 71 reaches a value smaller than a predetermined value. The check valve 40 is an example of a "first air pressure adjusting valve". The check valve 40 includes a body portion 40a, a valve member 40b and a compression coil spring 40c, which are provided in the body portion 40a, and an adjusting screw portion 40d provided so as to cover an upper opening of the body portion 40a. The valve member 40b is arranged to be urged toward the adjusting screw portion 40d by means of the compression coil spring 40c. The check valve 40 is arranged so that the valve member 40b would be opened against the urging force of the compression coil screw 40c to take air into the upper gas chamber 71 from the outside of the rear suspension 16 in the case that the air pressure of the upper gas chamber 71 reaches a value smaller than a predetermined value.

Moreover, in the first embodiment, provided in the air passage part 22b is a relief valve 41 arranged to exhaust air from the upper gas chamber 71 to the outside of the rear suspension 16 in the case that the air pressure of the upper gas chamber 71 reaches a value larger than a predetermined value. The relief valve 41 is an example of a "second air pressure adjusting valve". The relief valve 41 mainly includes a body portion 41a, a valve member 41b and a compression coil spring 41c, which are provided in the body portion 41a, and an adjusting screw portion 41d provided so as to cover an upper opening of the body portion 41a. The valve member 41b is arranged to be urged toward the air passage part 22b of the body portion 41a by means of the compression coil spring 41c. The relief valve 41 is arranged so that the valve member 41b would be opened against the urging force of the compression coil screw 41c to exhaust air to the outside of the rear suspension 16 from the upper gas chamber 71 in the case that the air pressure of the upper gas chamber 71 reaches a value larger than a predetermined value.

At a lower part of the cylinder portion 22, provided is an outer cylinder portion 42 formed into the shape of a cylinder so as to cover an outer circumferential surface 22c of the cylindrical cylinder portion 22, in the first embodiment. In this example, a convex part 42b circularly projecting inward is formed at a lower end of an inner circumferential surface 42a of the outer cylinder portion 42 while a flange portion 37c is provided in an outer circumferential part of the lower lid body 37, in the first embodiment. A screw portion of the outer circumferential part of the lower lid body 37 is screwed in a screw portion of an inner surface of the cylinder portion 22 in the vicinity of a lower end of the cylinder portion 22 under a condition that the convex part 42a of the outer cylinder portion 42 is held between the lower end of the cylinder portion 22 and the flange portion 37c of the lower lid body 37. Further, between an upper part of the convex part 42b of the inner circumferential surface 42a of the outer cylinder portion 42 and an outer circumferential surface 22c of the cylinder portion 22, provided is a sealing member 43 formed from a rubber O-ring. The outer cylinder portion 42 is an example of a "second cylinder portion". The cylinder portion 22 and the outer cylinder portion 42 are arranged in the shape of concentric circles.

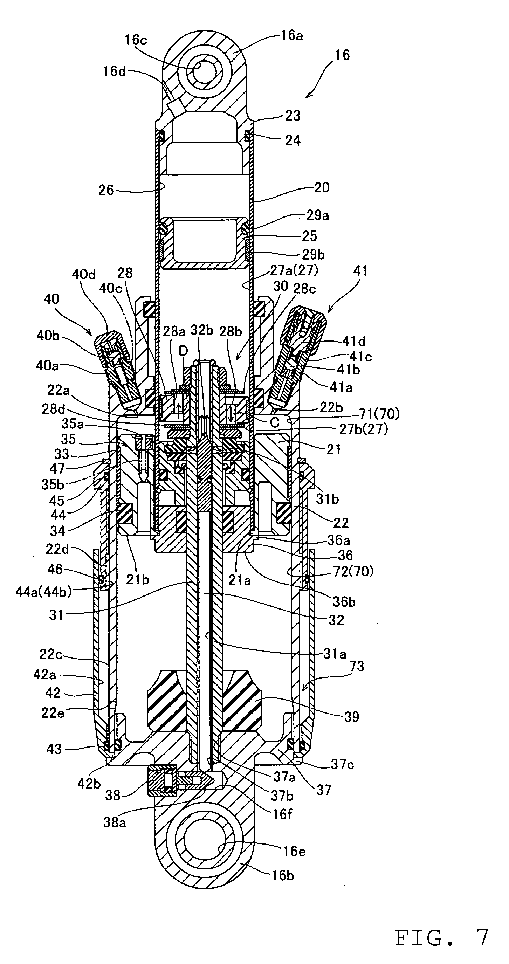

Further, in the first embodiment, a volume adjusting member 44 is provided between an inner circumferential surface 42a of the outer cylinder portion 42 and an outer circumferential surface 22c of the cylinder portion 22. In this example, the volume adjusting member 44 is formed into the shape of a cylinder so as to cover the outer circumferential surface 22c of the cylinder portion 22. A screw portion 44b is formed in an inner circumferential surface 44a of the volume adjusting member 44. The screw portion 44b is an example of a "first screw portion". Furthermore, a screw portion 22d, which can be screwed in the screw portion 44b, is formed in a part corresponding to the screw portion 44b of the volume adjusting member 44 in the outer circumferential surface 22c of the cylinder portion 22. The screw portion 22d is an example of a "second screw portion". The volume adjusting member 44 is arranged to be movable in the vertical direction by a rotation with respect to the outer circumferential surfaced 22c of the cylinder portion 22. This causes the lower part of the volume adjusting member 44 to move in the vertical direction so as to change the volume of the outer gas chamber 73 formed from the outer circumferential surface 22c of the cylinder portion 22 and the inner circumferential surface 42a of the outer cylinder portion 42, as shown in Fig. 7, so that the volume of the outer gas chamber 73 formed from the outer circumferential surface 22c of the cylinder portion 22 and the inner circumferential surface 42a of the outer cylinder portion 42 can be changed. The outer gas chamber 73 is an example of a "third gas chamber". The volume adjusting member 44 is an example of a "volume adjusting portion".

Moreover, in the first embodiment, a connection hole 22e for connecting the lower gas chamber 72 and the outer gas chamber 73 is formed in a part of the cylinder portion 22 on the lower gas chamber 72 side, as shown in Figs. 3 and 7. That is to say, both of the air with which the lower gas chamber 72 is filled and the air with which the outer gas chamber 73 is filled can mutually flow and changing the volume of the outer gas chamber 73 allows the volume of the gas chambers under the piston portion 21 (the lower gas chamber 72 and the outer gas chamber 73) to be changed.

Furthermore, between the outer circumferential surface 22c of the cylinder portion 22 and an upper part of the inner circumferential surface 44a of the volume adjusting member 44, provided is a sealing member 45 in the first embodiment. Additionally, a sealing member 46 is provided between a lower part of the outer circumferential surface 44c of the volume adjusting member 44 and the inner circumferential surface 42a of the outer cylinder portion 42. This allows the air to be prevented from leaking between the cylinder portion 22 and the volume adjusting member 44 and between the volume adjusting member 44 and the outer cylinder portion 42. Moreover, a stopper ring 47 is mounted to an upper part of the volume adjusting member 44 in the outer circumferential surface 22c of the cylinder portion 22. The stopper ring 47 is arranged to be in contact with an upper end of the volume adjusting member 44 when the volume adjusting member 44 is pulled from the outer gas chamber 73 by an amount larger than a predetermined amount.

Fig. 8 is a graph for illustrating an extension and contraction characteristic of a rear suspension of the motorcycle in accordance with the first embodiment, which is shown in Fig. 1. Now, an extension and contraction characteristic of the rear suspension 16 of the motorcycle 1 in accordance with the first embodiment of the invention is described in detail with reference to Figs. 3, 4, 7 and 8.

A curve A1 in Fig. 8 is a lower gas chamber basic curve showing a relation between a stroke of the rear suspension 16 and inner pressure of the lower gas chamber 72 and the outer gas chamber 73 when the rear suspension 16 extends and contracts in the case that the lower part of the volume adjusting member 44 is moved upward not to be inserted into the outer gas chamber 73 (a state in Fig. 7). The curve A1 has a characteristic that the inner pressure of the lower gas chamber 72 and the outer gas chamber 73 increases in accordance with an increase in stroke of the rear suspension 16 since the piston portion 21 moves downward when the rear suspension 16 contracts. A curve A2 is a curve showing a relation between a stroke of the rear suspension 16 and the inner pressure of the lower gas chamber 72 and the outer gas chamber 73 when the rear suspension 16 extends and contracts in the case that the lower part of the volume adjusting member 44 is moved downward to be inserted into the outer gas chamber 73 (a state in Figs. 3 and 4). The curve A2 has a characteristic that the inner pressure of the lower gas chamber 72 and the outer gas chamber 73 increases in accordance with an increase in the stroke of the rear suspension 16 since the piston portion 21 moves downward when the rear suspension 16 contracts, similarly to the case of the curve A1. The curve A2, however, has a characteristic that the inner pressure increases more in accordance with an increase in stroke of the rear suspension 16 than the case of the curve A1 since the volume of the lower gas chamber 72 and the outer gas chamber 73 is small in an initial state of the rear suspension 16 (in the case that the stroke is 0).

A curve A3 is an upper gas chamber basic curve showing a relation between the stroke of the rear suspension 16 and the inner pressure of the upper gas chamber 71 when the rear suspension 16 extends and contracts. The curve A3 has a characteristic that the inner pressure of the upper gas chamber 71 decreases in accordance with an increase in stroke since the piston portion 21 moves downward when the rear suspension 16 contracts. The inner pressure of the upper gas chamber 71 is influenced only by the stroke but not by an increase or a decrease in volume of the outer gas chamber 73. Accordingly, the characteristic of the curve A3 does not change even in the case of states respectively corresponding to the curves A1 and A2.

Further, the curves A1 in which the inner pressure of the lower gas chamber 72 and the outer gas chamber 73 increases in accordance with an increase in stroke of the rear suspension 16 and the curves A3 wherein the inner pressure of the upper gas chamber 71 decreases in accordance with an increase in stroke of the rear suspension 16 have the above characteristics. This causes the rear suspension 16 to generate reaction force in contraction. In this example, a basis characteristic curve showing a relation between a load (reaction force) added to the rear suspension 16 in extension and contraction of the rear suspension 16 in the case that the lower part of the volume adjusting member 44 is moved upward not to be inserted into the outer gas chamber 73 (a state in Fig. 7) and the stroke of the rear suspension 16 shows a characteristic of a characteristic curve A4. Moreover, similarly to the curves A1 and A3, the curves A2 and A3 have the above characteristics. Accordingly, the rear suspension 16 generates reaction force in contraction. At that time, the basic characteristic curve showing a relation between the load (reaction force) added to the rear suspension 16 in extension and contraction of the rear suspension 16 in the case that the lower part of the volume adjusting member 44 is inserted into the outer gas chamber 73 (a state in Figs. 3 and 4) and the stroke of the rear suspension 16 shows a characteristic of a characteristic curve A5 since the inner pressure for a predetermined stroke is larger in the case of the curve A2 than the case of the curve A1. That is to say, the reaction force generated in contraction of the rear suspension 16 is larger in the case that the lower part of the volume adjusting member 44 is inserted into the outer gas chamber 73 (a state in Figs. 3 and 4) than the case that the lower part of the volume adjusting member 44 is not inserted into the outer gas chamber 73 (a state in Fig. 7).

Now, an operation of the rear suspension 16 of the motorcycle 1 in accordance with the first embodiment will be described with reference to Figs. 3, 4 and 8.

First, a case will be described in which the force in a direction of contraction operates on the rear suspension 16.

As shown in Fig. 4, the rear suspension 16 contracts against the air pressure of the lower gas chamber 72 when the force in a direction of contraction operates on the rear suspension 16. In this case, expansion of the air in the upper gas chamber 71 due to an increase in volume of the upper gas chamber 71 causes a decrease in air pressure of the upper gas chamber 71 along the curve A3 in Fig. 8, in the first embodiment. Under such a condition, air is properly taken from the outside of the rear suspension 16 into the upper gas chamber 71 by means of the check valve 40 when the pressure of the upper gas chamber 71 reaches a predetermined value or less.

In the case that the force in a direction of contraction operates on the rear suspension 16 to cause contraction of the rear suspension 16 against the air pressure of the lower gas chamber 72, the volume of the lower gas chamber 72 decreases to compress the air in the lower gas chamber 72, and thereby, the air pressure of the lower gas chamber 72 rises along the curve A1 in Fig. 8 while the reaction force is generated against the force in a direction of contraction of the rear suspension 16.

At that time, the pressure of the upper oil chamber 27a rises to open the washer 28d of the piston portion 28 when the rod portion 20 is lifted down with respect to the cylinder portion 22 and the piston portion 28. The oil in the upper oil chamber 27a then flows in a direction shown by an arrow C through the orifice 28b and the washer 28d of the piston portion 28 into the lower oil chamber 27b. In this case, resistance generated in the flow of the oil in the orifice 28b of the piston portion 28 causes attenuation force to occur. Simultaneously, the oil in the upper oil chamber 27a flows into the lower oil chamber 27b through an upper end part of the through hole 31a, oil flowing paths, which are formed between the through hole 31a and the adjusting hole part 31b and the upper end part 32b, and the adjusting hole part 31b. In this case, resistance generated in the flow of the oil in the oil flowing paths formed between the through hole 31a and the adjusting hole part 31b and the upper end part 32b causes attenuation force to occur.

Now, a case will be described in which the force in a direction of extension operates on the rear suspension 16.

As shown in Fig. 3, the rear suspension 16 extends when the force in a direction of extension operates on the rear suspension 16. In this case, compression of the air in the upper gas chamber 71 due to a decrease in volume of the upper gas chamber 71 causes the air pressure of the upper gas chamber 71 to rise along the curve A3 in Fig. 8. At that time, the air is properly exhausted from the upper gas chamber 71 to the outside of the rear suspension 16 by means of the relief valve 41 when the pressure of the upper gas chamber 71 increases more than the predetermined pressure.

Further, in the case that the force in a direction of extension operates on the rear suspension 16 to cause the rear suspension 16 to extend, the air in the lower gas chamber 72 is expanded due to an increase in volume of the lower gas chamber 72, so that the air pressure of the lower gas chamber 72 decreases along the curve A1 in Fig. 8.

Moreover, the pressure of the lower oil chamber 27b rises to open the washer 28c of the piston portion 28 when the rod portion 20 is lifted up with respect to the cylinder portion 22 and the piston portion 28 at that time. The oil in the lower oil chamber 27b then flows in a direction shown by an arrow D through the orifice 28a of the piston portion 28 into the upper oil chamber 27a. In this case, resistance generated in the flow of the oil in the orifice 28a and the washer 28c of the piston portion 28 causes attenuation force to occur. Simultaneously, the oil in the lower oil chamber 27b flows into the upper oil chamber 27a through the adjusting hole part 31b, the oil flow paths, which are formed between the through hole 31a and the adjusting hole part 31b and the upper end part 32b, and the upper end part of the through hole 31a. In this case, resistance generated in the flow of the oil in the oil flowing paths formed between the through hole 31a and the adjusting hole part 31b and the upper end part 32b causes attenuation force to occur.

In the first embodiment, the rear suspension 16 is provided with the cylinder portion 22 whose inside is filled with air and the outer cylinder portion 42, which is directly mounted to the cylinder portion 22 and arranged so that its volume can be adjusted, as described above. This allows the outer cylinder portion 42 to be firmly fixed to the cylinder portion 22, so that no mounting portion for mounting the outer cylinder portion 42 to the body is required to be provided. As a result, no requirement of providing the mounting portion for the outer cylinder portion 42 allows a space for providing the rear suspension 16 in the body to be reduced.

In addition, connecting the lower gas chamber 72 of the cylinder portion 22 directly to the outer cylinder portion 42 through the connection hole 22e allows the lower gas chamber 72 to be connected to the outer cylinder portion 42 without providing a hose or the like for connecting the lower gas chamber 72 and the outer cylinder portion 42, as described above, in the first embodiment. This contributes to prevention of an increase of components in number.

Further, in the first embodiment, the rear suspension 16 is provided with the check valve 40, which is arranged so that extension and contraction of the rear suspension 16 would cause air to be taken into the upper gas chamber 71 from the outside of the rear suspension 16, and the relief valve 41, which is arranged to exhaust air from the upper gas chamber 71 to the outside of the rear suspension 16, as described above. Accordingly, the pressure in the upper gas chamber 71 can be kept at predetermined pressure by means of the check valve 40 and the relief valve 41.

Moreover, in the first embodiment, connecting the outer gas chamber 73 to the lower gas chamber 72 by means of the connection hole 22e allows the lower gas chamber 72 to be connected to the outer gas chamber 73 without providing any hose and such for connecting the lower gas chamber 72 to the outer gas chamber 73, as described above. This also allows the number of the components to be prevented from increasing.

Furthermore, arranging the cylinder portion 22 and the outer cylinder portion 42 in the shape of concentric circles allows the outer gas chamber 73 to be provided in the area surrounded by the outer circumferential surface 22c of the cylinder portion 22 and the inner circumferential surface 42a of the outer cylinder portion 42, as described above, in the first embodiment. Accordingly, the outer gas chamber 73 arranged to be adjustable in volume is not necessary to be provided separately from the cylinder portion 22. This allows a space for mounting the rear suspension 16 to the body to be made even smaller.

Additionally, in the first embodiment, the rear suspension 16 is provided with the volume adjusting member 44 provided between the inner circumferential surface 42a of the outer cylinder portion 42 and the outer circumferential surface 22c of the cylinder portion 22 for adjusting the volume of the outer gas chamber 73, as described above. This allows the volume of the outer gas chamber 73 to be easily adjusted.

Furthermore, the screw portion 44b is formed in the inner circumferential surface 44a of the volume adjusting member 44 while the screw portion 22d, which can be screwed in the screw portion 44b, is formed in the outer circumferential surface 22c of the cylinder portion 22, as described above, in the first embodiment. Accordingly, rotating the volume adjusting member 44 with respect to the cylinder portion 22 allows the volume of the outer gas chamber 73 to be easily adjusted.

In the first embodiment, the end part 21b of the piston portion 21 on the lower gas chamber 72 side is provided closer to the upper gas chamber 71 than the end part 36b of the lid body 36 on the lower gas chamber 72 side, as described above. Providing the end part 21b of the piston portion 22 closer to the upper gas chamber 71 than the end part 36b of the lid body 36 allows the volume of the lower gas chamber 72 to be increased by an amount corresponding to a position of the end part 21b.

Moreover, in the first embodiment, the rear suspension 16 is provided with the piston portion 28 provided in the oil chamber 27 of the rod portion 20 and the attenuation mechanism portion 30 for generating attenuation force in the rear suspension 16 by moving the piston portion 28 in the oil chamber 27 of the rod portion 20 in extension and contraction of the rear suspension 16, as described above. This allows the extension and contraction force generated in extension and contraction of the rear suspension 16, to be easily attenuated.

Further, in the first embodiment, it is arranged that air be supplied from the upper gas chamber 71 to the lower gas chamber 72 through the air adjusting valve 35 when the air pressure of the lower gas chamber 72 becomes smaller than the air pressure of the upper gas chamber 71 due to expansion of the air in the lower gas chamber 72 in extension and contraction of the rear suspension 16, as described above. This allows the air pressure of the upper gas chamber 71 and the lower gas chamber 72 to be kept at the predetermined air pressure.

### Second Embodiment

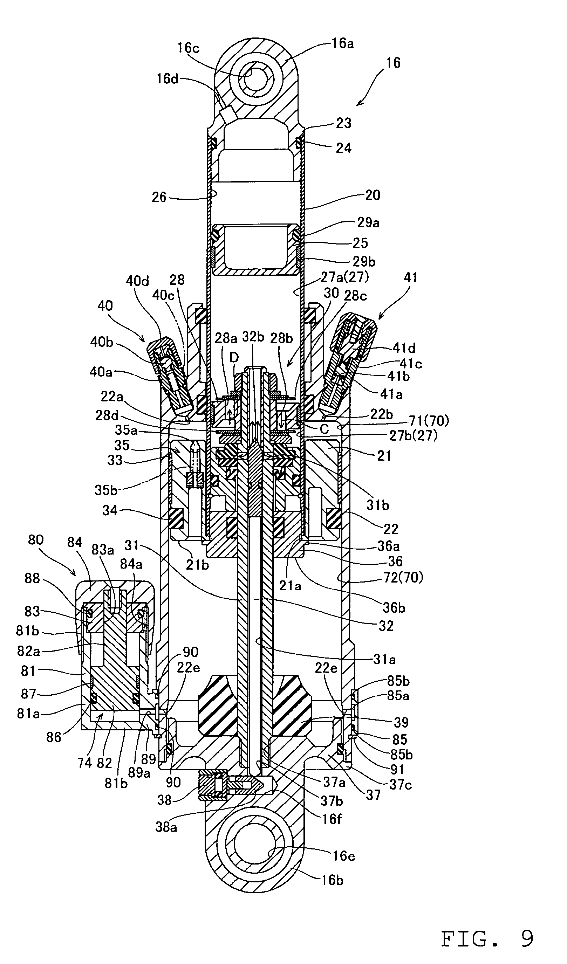

Figs. 9 to 11 illustrate in detail a structure of a rear suspension of a motorcycle in accordance with a second embodiment of the invention. Now, a structure of a rear suspension in accordance with the second embodiment of the invention is described in detail with reference to Figs. 9 to 11. In the second embodiment, described will be an example of directly providing a sub tank portion 81, which is adjustable in volume, so as to be adjacent to a position corresponding to the lower gas chamber 72 of the cylinder portion 22, differently from the first embodiment.

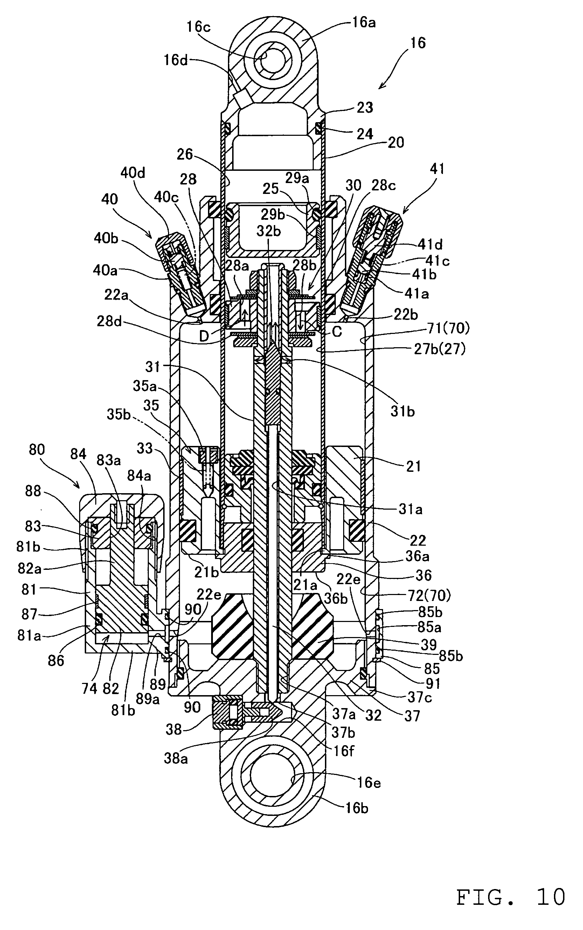

In the second embodiment, at a lower part of the cylinder portion 22, provided adjacently to the cylinder portion 22 is the sub tank portion 81 of a sub tank unit 80, as shown in Figs. 9 and 10. The sub tank unit 80 mainly comprises the sub tank portion 81, a piston portion 82 provided in the sub tank portion 81, a lid portion 83 mounted to an upper end part of the sub tank portion 81, an adjusting screw portion 84, which can adjust a position of the piston portion 82 in the sub tank portion 81, and a mounting portion 85 for directly mounting the sub tank unit 80 to the cylinder portion 22. The sub tank portion 81 is an example of a "second cylinder portion".

Further, in the second embodiment, the sub tank portion 81 includes a side surface part 81a having a cylindrical shape and a bottom surface part 81b formed into one body with the side surface part 81a. The piston portion 82 is provided in the sub tank portion 81 slidably with respect to an inner surface of the side surface part 81a. The piston portion 82 includes a rod portion 82a extending upward. An upper end of the rod portion 82a is mounted to the adjusting screw portion 84. Between an outer circumferential surface of the piston portion 82 and an inner circumferential surface of the side surface part 81a of the sub tank portion 81, provided are a rubber sealing member 86 and a metallic or resin slide metal 87, which is processed so that its resistance on the sliding surface would be reduced. The lid portion 83 is mounted to the upper part of the sub tank portion 81 so as to close an opening of the sub tank portion 81. In the lid portion 83, vertically formed is a hole portion 83a. The rod portion 82a of the piston portion 82 is inserted into the hole portion 83a. A rubber sealing member 88 is provided between an outer circumferential surface of the lid portion 83 and the inner circumferential surface of the side surface part 81a of the sub tank portion 81. The adjusting screw portion 84 is provided so as to cover an upper side of the sub tank portion 81 and an upper part of an outer surface of the side surface part 81a. A screw portion 81b is formed in the upper part of the outer surface of the side surface part 81a of the sub tank portion 81. A screw portion 84a, which can be screwed in the screw portion 81b, is formed in a part corresponding to the screw portion 81b of the adjusting screw portion 84. It is arranged that rotating the adjusting screw portion 84 with respect to the sub tank portion 81 allow the piston portion 82 to be slidable with respect to the inner circumferential surface of the sub tank portion 81. This allows the volume of the outer gas chamber 74 formed from the inner surface of the sub tank portion 81 and a lower end surface of the piston portion 82 to be changeable. The outer gas chamber 74 is an example of a "fourth gas chamber".

Moreover, in the second embodiment, the sub tank portion 81 is connected to the mounting portion 85 through a connection portion 89. In this example, the sub tank portion 81, the mounting portion 85 and the connection portion 89 are formed into one body and the sub tank portion 81 and the mounting portion 85 are connected firmly by means of the connection portion 89.

In addition, the mounting portion 85 is formed into the shape of a circumference so as to cover an outer circumferential surface of the cylinder portion 22 and a groove part 85a is formed into the shape of a circumference in an inner circumferential surface of the mounting portion 85, in the second embodiment. The groove part 85a is an example of a "first groove part". The groove part 85a is provided in a part corresponding to the connection hole 22e formed in a part corresponding to a part of the cylinder portion 22 on the lower gas chamber 72 side. In the connection portion 89, formed is a connection hole 89a for connecting a bottom surface of the groove part 85a and the outer gas chamber 74 of the sub tank portion 81. The lower gas chamber 72 of the cylinder portion 22 is connected to the outer gas chamber 74 of the sub tank portion 81 through the connection hole 22e, the groove part 85a and the connection hole 89a. That is to say, both of the air with which the lower gas chamber 72 is filled and the air with which the outer gas chamber 74 is filled are able to mutually flow, and therefore, changing the volume of the outer gas chamber 74 allows the volume of the gas chambers under the piston portion 21 (the lower gas chamber 72 and the outer gas chamber 74) to be changed.

In the second embodiment, formed is the groove part 85a formed into the shape of a circumference in the inner circumferential surface of the mounting portion 85. Accordingly, the connection hole 89a of the connection portion 89 and the connection hole 22e of the cylinder portion 22 are not necessarily located in a straight line. That is to say, the sub tank portion 81 in accordance with the second embodiment can be provided in any position so long as the position is adjacent to the cylinder portion 22 and the groove part 85a is provided so as to cover the connection hole 22e. This allows a degree of freedom of arrangement of the sub tank portion 81 to be improved.

Further, a sealing groove 85b extending substantially parallel to the groove part 85a of the inner circumferential surface of the mounting portion 85 is formed in a part adjacent to the groove part 85a, in the second embodiment. The sealing groove 85b is an example of a "second groove part". The sealing groove 85b is formed on both of the upper and lower sides of the groove part 85a. In the two sealing grooves 85b, respectively provided are sealing members 90. The sealing members 90 have a function of sealing a space between the outer circumferential surface 22c of the cylinder part 22 and the sub tank portion 81. This allows the air flowing between the connection portion 22e of the cylinder portion 22 and the groove part 85a to be prevented from leaking to the outside.

Moreover, in the second embodiment, a stopper ring 91 is mounted under a part of the outer circumferential surface 22c of the cylinder portion 22, the part where the mounting portion 85 is provided. The stopper ring 91 has a function of preventing the mounting portion 85 from sliding from the outer circumferential surface 22c of the cylinder portion 22 and from coming off from the cylinder portion 22.

The structure in accordance with the second embodiment other than the above is same as the structure in accordance with the first embodiment, and therefore, description thereof is omitted.

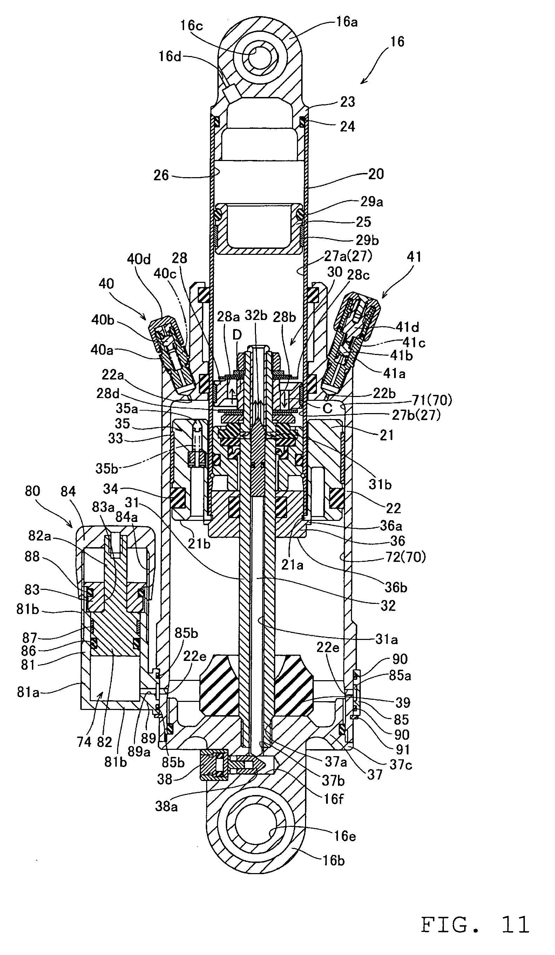

The extension and contraction characteristic of the rear suspension 16 of the motorcycle in accordance with the second embodiment of the invention is similar to the characteristic in the first embodiment. That is to say, the curve A1 in Fig. 8 shows a relation between a stroke of the rear suspension 16 and the inner pressure of the lower gas chamber 72 and the outer gas chamber 74 when the rear suspension 16 extends and contracts in the case that the piston portion 82 of the sub tank unit 80 is not inserted into the outer gas chamber 74 (in a state in Fig. 11). A relation between a stroke of the rear suspension 16 and the inner pressure of the lower gas chamber 72 when the rear suspension 16 extends and contracts in the case that the piston portion 82 of the sub tank unit 80 is inserted into the outer gas chamber 74 (in a state in Figs. 9 and 10) is shown by the curve A2.

That is to say, reaction force in contraction of the rear suspension 16 is larger in the case that the piston portion 82 of the sub tank unit 80 is inserted into the outer gas chamber 74 (in a state in Figs. 9 and 10) than the case that the piston portion 82 of the sub tank unit 80 is not inserted into the outer gas chamber 74 (in a state in Fig. 11).

An operation in the second embodiment is similar to the operation in the first embodiment. Accordingly, it is omitted from description.

In the second embodiment, the rear suspension 16 is provided with the cylinder portion 22 filled with air and the sub tank portion 81 directly mounted to the cylinder portion 22 and arranged so that its volume can be adjusted. This allows the sub tank portion 81 to be firmly fixed to the cylinder portion 22, so that no mounting portion for mounting the sub tank portion 81 to the body is necessary to be provided. This results in no necessity of providing the mounting portion for the sub tank portion 81, and therefore, a space for providing the rear suspension 16 in the body can be reduced.

Furthermore, in the second embodiment, the connection holes 22e and 89a are formed in a part corresponding to the lower gas chamber 72 of the cylinder portion 22 and a part corresponding to the outer gas chamber 74 of the groove part 85a of the sub tank portion 81, as described above. This allows the lower gas chamber 72 and the outer gas chamber 74 to be easily connected by means of the connection holes 22e and 89a.

Additionally, the rear suspension 16 is provided with a sealing member 90, which is provided in the sealing groove 85b and which seals a space between the outer circumferential surface 22c of the cylinder portion 22 and the sub tank portion 81 (the mounting portion 85), in the second embodiment as described above. This allows a space between the cylinder portion 22 and the sub tank portion 81 to be easily sealed by means of the sealing member 90.

### Third Embodiment

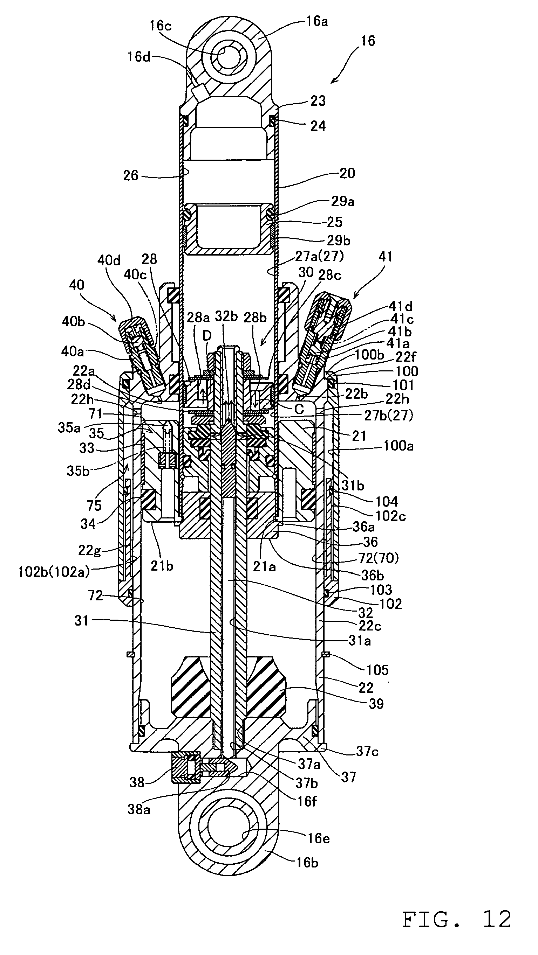

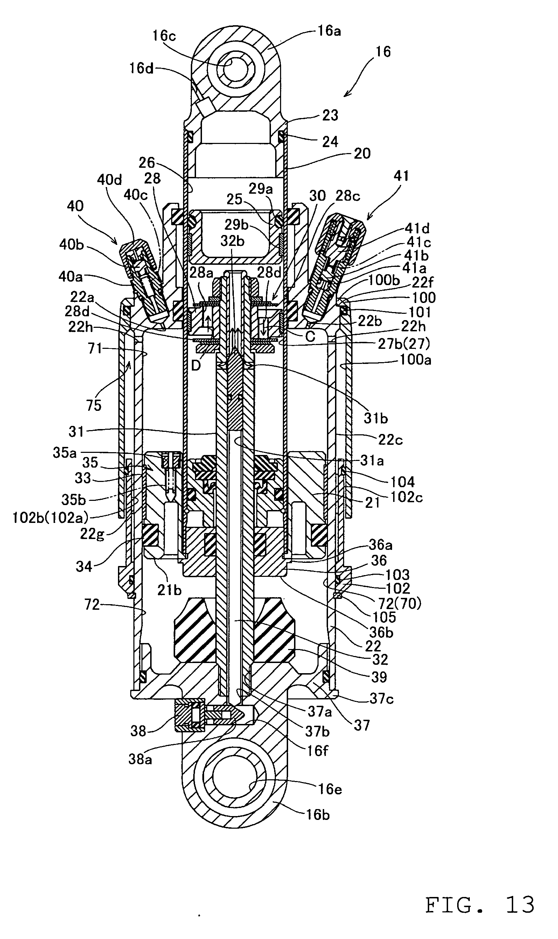

Figs. 12 and 13 illustrate in detail a structure of a rear suspension of a motorcycle in accordance with a third embodiment of the invention. In the third embodiment, an example is described of directly providing an outer cylinder portion capable of adjusting its volume so as to cover a position corresponding to the upper gas chamber 71 of the outer circumferential surface 22c of the cylinder portion 22, differently from the first embodiment.

In the third embodiment, an outer cylinder portion 100 formed into the shape of a cylinder so as to cover the outer circumferential surface 22c of the cylinder portion 22 is provided in an upper part of the cylinder portion 22. In this example, an annular convex portion 100b is formed at an upper end of an inner circumferential surface 100a of the outer cylinder portion 100 while a step portion 22f is formed in the vicinity of a part where the check valve 40 and the relief valve 41 of the cylinder portion 22 are provided. Fixing the convex portion 100b in the step portion 22f causes the outer cylinder portion 100 to be fixed to the cylinder portion 22. A sealing member 101 formed from a rubber O-ring is provided between a lower part of the convex portion 100b of the inner circumferential surface 100a of the outer cylinder portion 100 and the outer circumferential surface 22c of the cylinder portion 22. The outer cylinder portion 100 is an example of a "second cylinder portion". The cylinder portion 22 is arranged concentrically with the outer cylinder portion 100.

Further, a volume adjusting member 102 is provided between the inner circumferential surface 100a of the outer cylinder portion 100 and the outer circumferential surface 22c of the cylinder portion 22 in the third embodiment. The volume adjusting member 102 is an example of a "volume adjusting portion". The volume adjusting member 102 is formed in the shape of a cylinder so as to cover the outer circumferential surface 22c of the cylinder portion 22. In an inner circumferential surface 102a of the volume adjusting member 102, formed is a screw portion 102b. The screw portion 102b is an example of a "first screw portion". A screw portion 22g capable of screwing in the screw portion 102b is formed in a part of the outer circumferential surface 22c of the cylinder portion 22, the part facing to the screw portion 102b of the volume adjusting member 102. The screw portion 22g is an example of a "second screw portion". The volume adjusting member 102 is arranged to be movable in the vertical direction in accordance with its rotation with respect to the outer circumferential surface 22c of the cylinder portion 22. This causes an upper part of the volume adjusting member 102 to be inserted into and pulled out from the outer gas chamber 75 formed from the outer circumferential surface 22c of the cylinder portion 22 and the inner circumferential surface 100a of the outer cylinder portion 100. This allows the outer gas chamber 75 formed from the outer circumferential surface 22c of the cylinder portion 22 and the inner circumferential surface 100a of the outer cylinder portion 100 to be changed in volume. The outer gas chamber 75 is an example of a "third gas chamber".

Moreover, in the third embodiment, a connection hole 22h for connecting the upper gas chamber 71 and the outer gas chamber 75 is formed in a part of the cylinder portion 22 on the upper gas chamber 71 side. That is to say, both of the air with which the upper gas chamber 71 is filled and the air with which the outer gas chamber 75 is filled can mutually flow, and therefore, changing the volume of the outer gas chamber 75 allows the volume of the gas chambers above the piston portion 21 (the upper gas chamber 71 and the outer gas chamber 75) to be changed.

In addition, a sealing member 103 is provided between the outer circumferential surface 22c of the cylinder portion 22 and a lower part of the inner circumferential surface 102a of the volume adjusting member 102 while a sealing member 104 is provided between an upper part of the outer circumferential surface 102c of the volume adjusting member 102 and the inner circumferential surface 100a of the outer cylinder portion 100, in the third embodiment. This allows the air to be prevented from leaking between the cylinder portion 22 and the volume adjusting member 102 and between the volume adjusting member 102 and the outer cylinder portion 100. In a part of the outer circumferential surface 22c of the cylinder portion 22 under the volume adjusting member 102, mounted is a stopper ring 105. The stopper ring 105 is arranged so as to be in contact with a lower end part of the volume adjusting member 102 when the volume adjusting member 102 is pulled out from the outer gas chamber 75 by the length longer than predetermined length.

The structure in accordance with the third embodiment, other than the above, is similar to the structure in accordance with the first embodiment, and therefore, description thereof is omitted.

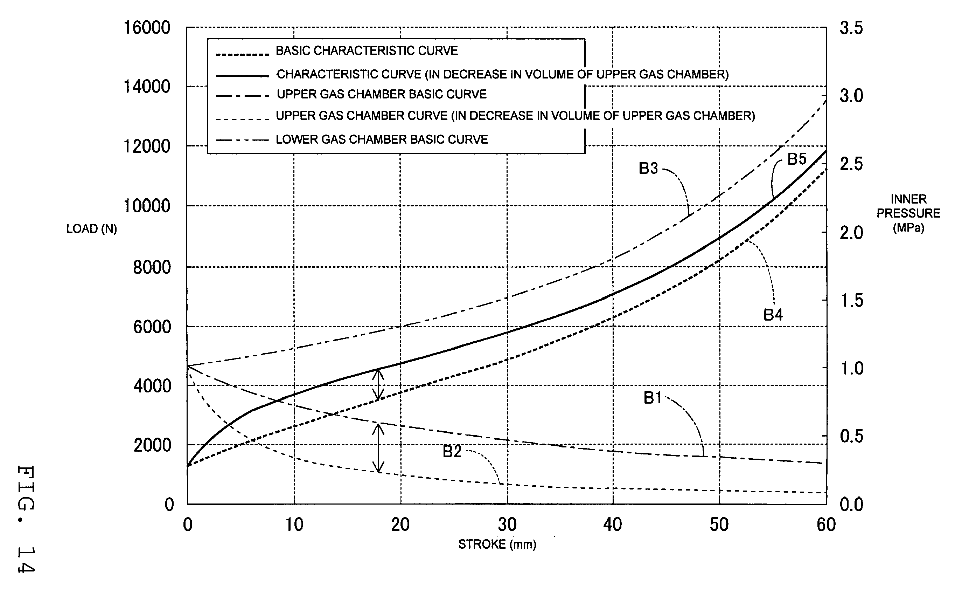

Fig. 14 is a graph for illustrating an extension and contraction characteristic of a rear suspension of a motorcycle shown in Fig. 1 in accordance with the third embodiment. The extension and contraction characteristic of the rear suspension 16 of the motorcycle 1 in accordance with the third embodiment of the invention is now described with reference to Figs. 12 to 14.

A curve B1 in Fig. 14 is an upper gas chamber basic curve showing a relation between a stroke of the rear suspension 16 and inner pressure of the upper gas chamber 71 and the outer gas chamber 75 when the rear suspension 16 extends and contracts in the case that the upper part of the volume adjusting member 102 is moved downward not to be inserted into the outer gas chamber 75 (a state in Fig. 13). The curve B1 has a characteristic that the inner pressure of the upper gas chamber 71 and the outer gas chamber 75 decreases in accordance with an increase in stroke of the rear suspension 16 since the piston portion 21 moves downward when the rear suspension 16 contracts. A curve B2 is a curve showing a relation between a stroke of the rear suspension 16 and the inner pressure of the upper gas chamber 71 and the outer gas chamber 75 when the rear suspension 16 extends and contracts in the case that the upper part of the volume adjusting member 102 is moved upward to be inserted into the outer gas chamber 75 (a state in Fig. 12). The curve B2 has a characteristic that the inner pressure of the upper gas chamber 71 and the outer gas chamber 75 decreases in accordance with an increase in the stroke of the rear suspension 16 since the piston portion 21 moves downward when the rear suspension 16 contracts, similarly to the case of the curve B1. The curve B2, however, has a characteristic that the inner pressure decreases more in accordance with an increase in stroke of the rear suspension 16 than the case of the curve B1 since the volume of the upper gas chamber 71 and the outer gas chamber 75 is small in an initial state of the rear suspension 16 (in the case that the stroke is 0).

A curve B3 is a lower gas chamber basic curve showing a relation between the stroke of the rear suspension 16 and the inner pressure of the lower gas chamber 72 when the rear suspension 16 extends and contracts. The curve B3 has a characteristic that the inner pressure of the lower gas chamber 72 increases in accordance with an increase in stroke of the rear suspension 16 since the piston portion 21 moves downward when the rear suspension 16 contracts. The inner pressure of the lower gas chamber 72 is influenced only by the stroke but not by an increase or a decrease in volume of the outer gas chamber 75. Accordingly, the characteristic of the curve B3 does not change even in the case of states respectively corresponding to the curves B1 and B2.

Further, the curves B1 in which the inner pressure of the upper gas chamber 71 and the outer gas chamber 75 decreases in accordance with an increase in stroke of the rear suspension 16 and the curves B3 in which the inner pressure of the lower gas chamber 72 increases in accordance with an increase in stroke of the rear suspension 16 have the above characteristics. This causes the rear suspension 16 to generate reaction force in a direction of the extension and contraction in contraction. A example basis characteristic curve showing a relation between a load (reaction force) added to the rear suspension 16 in extension and contraction of the rear suspension 16 in the case that the upper part of the volume adjusting member 102 is moved downward not to be inserted into the outer gas chamber 75 (a state in Fig. 13) and the stroke of the rear suspension 16 shows a characteristic of a characteristic curve B4. Moreover, similarly to the curves B1 and B3, the curves B2 and B3 have the above characteristics. Accordingly, the rear suspension 16 generates reaction force in the direction of the extension and contraction in contraction. At that time, the basic characteristic curve showing a relation between the load (reaction force) added to the rear suspension 16 in extension and contraction of the rear suspension 16 in the case that the upper part of the volume adjusting member 102 is moved upward to be inserted into the outer gas chamber 75 (a state in Fig. 12) and the stroke of the rear suspension 16 shows a characteristic of a characteristic curve B5 since the inner pressure for a predetermined stroke is smaller in the case of the curve B2 than the case of the curve B1. That is to say, the reaction force generated in contraction of the rear suspension 16 is larger in the case that the upper part of the volume adjusting member 102 is inserted into the outer gas chamber 75 (a state in Fig. 12) than the case that the upper part of the volume adjusting member 102 is not inserted into the outer gas chamber 75 (a state in Fig. 13).

Now, an operation of the rear suspension 16 of the motorcycle in accordance with the third embodiment will be described with reference to Figs. 12 to 14.

First, described will be a case that the force in a direction of contraction operates on the rear suspension 16.

As shown in Fig. 13, the rear suspension 16 contracts against the air pressure of the lower gas chamber 72 when the force in a direction of contraction operates on the rear suspension 16. In this case, expansion of the air in the upper gas chamber 71 due to an increase in volume of the upper gas chamber 71 causes a decrease in air pressure of the upper gas chamber 71 along the curve B1 in Fig. 14, in the third embodiment. Under such a condition, air is properly taken from the outside of the rear suspension 16 into the upper gas chamber 71 by means of the check valve 40 when the pressure of the upper gas chamber 71 reaches a predetermined value or less.

In the case that the force in a direction of contraction operates on the rear suspension 16 to cause contraction of the rear suspension 16 against the air pressure of the lower gas chamber 72, the volume of the lower gas chamber 72 decreases to compress the air in the lower gas chamber 72, and thereby, the air pressure of the lower gas chamber 72 rises along the curve B3 in Fig. 14 while the reaction force is generated against the force in a direction of contraction of the rear suspension 16.

Now, a case that the force in a direction of extension operates on the rear suspension 16 is described.

As shown in Fig. 12, the rear suspension 16 extends when the force in a direction of extension operates on the rear suspension 16. In this case, compression of the air in the upper gas chamber 71 due to a decrease in volume of the upper gas chamber 71 causes the air pressure of the upper gas chamber 71 to rise along the curve B1 in Fig. 14. At that time, the air is properly exhausted from the upper gas chamber 71 to the outside of the rear suspension 16 by means of the relief valve 41 when the pressure of the upper gas chamber 71 increases more than the predetermined pressure.

Further, in the case that the force in a direction of extension operates on the rear suspension 16 to cause the rear suspension 16 to extend, the air in the lower gas chamber 72 is expanded due to an increase in volume of the lower gas chamber 72, so that the air pressure of the lower gas chamber 72 decreases along the curve B3 in Fig. 14.

An operation in the third embodiment is similar to the operation in the first embodiment, and therefore, it is omitted from description.

In the third embodiment, the rear suspension 16 is provided with the cylinder portion 22 whose inside is filled with air and the outer cylinder portion 100, which is directly mounted to the cylinder portion 22 and arranged so that its volume can be adjusted, as described above. This allows a space for providing the rear suspension 16 in the body to be reduced, similarly to the case of the first embodiment.

In the third embodiment, connecting the upper gas chamber 71 of the cylinder portion 22 directly to the outer cylinder portion 100 through the connection hole 22h allows the upper gas chamber 71 to be connected to the outer cylinder portion 100 without providing a hose or the like for connecting the upper gas chamber 71 and the outer cylinder portion 100, as described above. This contributes to prevention of an increase of the components in number.

Other advantages of the third embodiment are similar to those of the first embodiment.

### Fourth Embodiment

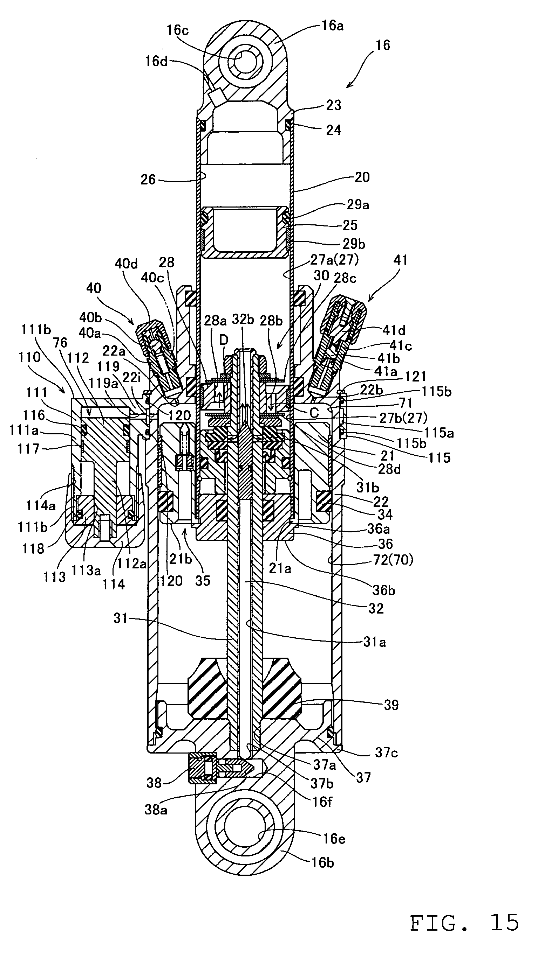

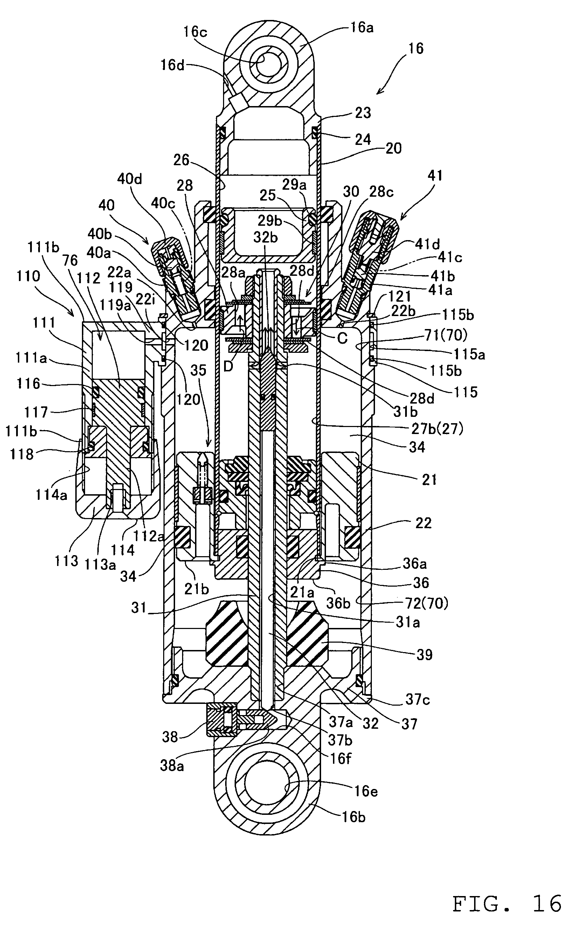

Figs. 15 and 16 illustrate in detail a structure of a rear suspension of a motorcycle in accordance with a fourth embodiment of the invention. Now, a structure of a rear suspension in accordance with the fourth embodiment of the invention is described in detail with reference to Figs. 14 to 16. In the fourth embodiment, an example is described of directly providing a sub tank portion 111, which is adjustable in volume, so as to be adjacent to a position corresponding to the upper gas chamber 71 of the cylinder portion 22, differently from the second embodiment.

In the fourth embodiment, at an upper part of the cylinder portion 22, provided adjacently to the cylinder portion 22 is a sub tank portion 111 of a sub tank unit 110, as shown in Figs. 15 and 16. The sub tank unit 110 mainly comprises the sub tank portion 111, a piston portion 112 provided in the sub tank portion 111, a lid portion 113 mounted to a lower end part of the sub tank portion 111, an adjusting screw portion 114, which can adjust a position of the piston portion 112 in the sub tank portion 111, and a mounting portion 115 for directly mounting the sub tank unit 110 to the cylinder portion 22. The sub tank portion 111 is an example of a "second cylinder portion".

Further, in the fourth embodiment, the sub tank portion 111 includes a side surface part 111a having a cylindrical shape and an upper surface part 111b formed into one body with the side surface part 111a. The piston portion 112 is provided in the sub tank portion 111 slidably with respect to an inner surface of the side surface part 111a. The piston portion 112 includes a rod portion 112a extending downward. A lower end of the rod portion 112a is mounted to the adjusting screw portion 114. Between an outer circumferential surface of the piston portion 112 and an inner circumferential surface of the side surface part 111a of the sub tank portion 111, provided are a rubber sealing member 116 and a metallic slide metal 117. The lid portion 113 is mounted to the lower part of the sub tank portion 111 so as to close an opening of the sub tank portion 111. In the lid portion 113, vertically formed is a hole portion 113a. The rod portion 112a of the piston portion 112 is inserted into the hole portion 113a. A rubber sealing member 118 is provided between an outer circumferential surface of the lid portion 113 and the inner circumferential surface of the side surface part 111a of the sub tank portion 111. The adjusting screw portion 114 is provided so as to cover a lower side of the sub tank portion 111 and a lower part of an outer surface of the side surface part 111a. A screw portion 111b is formed in the lower part of the outer surface of the side surface part 111a of the sub tank portion 111. A screw portion 114a, which can be screwed in the screw portion 111b, is formed in a part corresponding to the screw portion 111b of the adjusting screw portion 114. It is arranged that rotating the adjusting screw portion 114 with respect to the sub tank portion 111 allow the piston portion 112 to be slidable with respect to the inner circumferential surface of the sub tank portion 111. This allows the volume of the outer gas chamber 76 formed from the inner surface of the sub tank portion 111 and an upper end surface of the piston portion 112 to be changeable. The outer gas chamber 76 is an example of a "fourth gas chamber".

Moreover, in the fourth embodiment, the sub tank portion 111 is connected to the mounting portion 115 through a connection portion 119. In this example, the sub tank portion 111, the mounting portion 115 and the connection portion 119 are formed into one body and the sub tank portion 111 and the mounting portion 115 are connected firmly by means of the connection portion 119.

In addition, the mounting portion 115 is formed into the shape of a circumference so as to cover an outer circumferential surface of the cylinder portion 22 and a groove part 115a is formed into the shape of a circumference in an inner circumferential surface of the mounting portion 115, in the fourth embodiment. The groove part 115a is an example of a "first groove part". The groove part 115a is provided in a part corresponding to the connection hole 22i formed in a part corresponding to a part of the cylinder portion 22 on the upper gas chamber 71 side. In the connection portion 119, formed is a connection hole 119a for connecting a bottom surface of the groove part 115a and the outer gas chamber 76 of the sub tank portion 111. The upper gas chamber 71 of the cylinder portion 22 is connected to the outer gas chamber 76 of the sub tank portion 111 through the connection hole 22i, the groove part 115a and the connection hole 119a. That is to say, both of the air with which the upper gas chamber 71 is filled and the air with which the outer gas chamber 76 is filled are able to mutually flow, and therefore, changing the volume of the outer gas chamber 76 allows the volume of the gas chambers above the piston portion 21 (the upper gas chamber 71 and the outer gas chamber 76) to be changed.

In the fourth embodiment, formed is the groove part 115a formed into the shape of a circumference in the inner circumferential surface of the mounting portion 115. Accordingly, the connection hole 119a of the connection portion 119 and the connection hole 22i of the cylinder portion 22 are not necessarily located in a straight line. That is to say, the sub tank portion 111 in accordance with the fourth embodiment can be provided in any position so long as the position is adjacent to the cylinder portion 22 and the groove part 115a is provided so as to cover the connection hole 22i. This allows a degree of freedom of arrangement of the sub tank portion 111 to be improved.

Further, a sealing groove 115b extending substantially parallel to the groove part 115a of the inner circumferential surface of the mounting portion 115 is formed in a part adjacent to the groove part 115a, in the fourth embodiment. The sealing groove 115b is an example of a "second groove part". The sealing groove 115b is formed on both of the upper and lower sides of the groove part 115a. In the two sealing grooves 115b, respectively provided are sealing members 120. The sealing members 120 have a function of sealing a space between the outer circumferential surface 22c of the cylinder portion 22 and the sub tank portion 111. This allows the air flowing between the connection portion 22i of the cylinder portion 22 and the groove part 115a to be prevented from leaking to the outside.

Moreover, in the fourth embodiment, a stopper ring 121 is mounted above a part of the outer circumferential surface 22c of the cylinder portion 22, the part where the mounting portion 115 is provided. The stopper ring 121 has a function of preventing the mounting portion 115 from sliding from the outer circumferential surface 22c of the cylinder portion 22 and from coming off from the cylinder portion 22.

The structure in accordance with the fourth embodiment other than the above is same as the structure in accordance with the third embodiment, and therefore, description thereof is omitted.

The extension and contraction characteristic of the rear suspension 16 of the motorcycle in accordance with the fourth embodiment of the invention is similar to the characteristic in the third embodiment. That is to say, the curve B1 in Fig. 14 shows a relation between a stroke of the rear suspension 16 and the inner pressure of the upper gas chamber 71 and the outer gas chamber 76 when the rear suspension 16 extends and contracts in the case that the piston portion 112 of the sub tank unit 110 is not inserted into the outer gas chamber 76 (in a state in Fig. 16). A relation between a stroke of the rear suspension 16 and the inner pressure of the upper gas chamber 71 when the rear suspension 16 extends and contracts in the case that the piston portion 112 of the sub tank unit 110 is inserted into the outer gas chamber 76 (in a state in Fig. 15) is shown by the curve B2.

That is to say, reaction force in contraction of the rear suspension 16 is larger in the case that the piston portion 112 of the sub tank unit 110 is inserted into the inner part of the outer gas chamber 76 (in a state in Fig. 15) than the case that the piston portion 112 of the sub tank unit 110 is not inserted into the outer gas chamber 76 (in a state in Fig. 16).

An operation in the fourth embodiment is similar to the operation in the third embodiment. Accordingly, it is omitted from description.

Advantages of the fourth embodiment are similar to those of the second embodiment.

The embodiments disclosed here should be considered to be an example in all points and not to be limitation. A scope of the invention is not indicated in the description of the embodiments but in the claims. The scope of the invention includes all kinds of modification within the meaning and range equivalent to the claims.

In the first to fourth embodiments, for example, a motorcycle is described as an example of a vehicle comprising a suspension unit. The invention, however, is not limited to the above. The invention may be applicable to other vehicles such as an automobile, a bicycle, a tricycle and an ATV (an all terrain vehicle; a vehicle for traveling on the irregular ground) so long as the vehicle comprises a suspension unit.

Further, described in the first to fourth embodiments is an example that the invention is applied to the rear suspension, which is described as an example of the suspension unit. The invention, however, is not limited to the above and may be applicable to a front fork.

Moreover, in the first to fourth embodiments, examples are described in which the volume of the sub tank portion or the outer cylinder portion is arranged to be adjusted by rotating a screw. The invention, however, is not limited to the above. The volume of the sub tank portion or the outer cylinder portion may be arranged to be adjustable by using an actuator or the like.

Furthermore, described in the first to fourth embodiments is an example that the cylinder portion and the outer cylinder portion are formed separately. The invention, however, is not limited to the above. The cylinder portion and the outer cylinder portion may be formed into one body.

In addition, in the second and fourth embodiments, an example is described that it is arranged that a screw portion be formed in an upper part of an outer surface of the sub tank portion and an inner circumferential surface of the adjusting screw portion to cause the adjusting screw portion to be rotatable with respect to the sub tank portion so that the piston portion would be slidable with respect to an inner circumferential surface of the sub tank portion. The invention, however, is not limited to the above. It may be possible to form screw portions 132c and 133b in an outer circumferential surface 132b of a rod portion 132a of a piston portion 132 and an inner circumferential surface of a hole portion 133a of a lid portion 133, respectively, to arrange an adjusting screw portion 134 mounted to the piston portion 132 to be rotatable with respect to the lid portion 133 mounted to the sub tank portion 131, and thereby, to arrange the piston portion 132 to be slidable with respect to an inner circumferential surface of the sub tank portion 131.

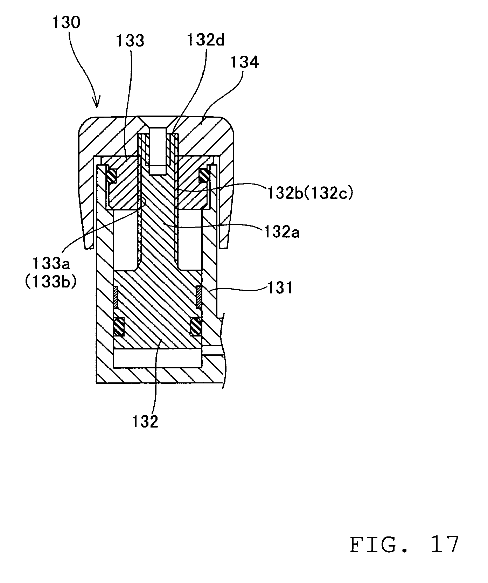

An example sub tank unit 130 in accordance with a first modification of the second and fourth embodiments comprises the sub tank portion 131, the piston portion 132 provided inside the sub tank portion 131, the lid portion 133 mounted to an upper end part of the sub tank portion 131 and the adjusting screw portion 134, which can adjust a position of the piston portion 132 in the sub tank portion 131, as shown in Fig. 17. The sub tank 131 is an example of a "second cylinder portion".

Inside the sub tank portion 131, the piston portion 132 is provided slidably with respect to the inner surface. The piston portion 132 includes a rod portion 132a extending upward. An upper end part of the rod portion 132a is mounted to the adjusting screw portion 134. The screw portion 132c is formed in the outer circumferential surface 132b of the rod portion 132a. Above the sub tank portion 131, mounted is the lid portion 133 so as to close an opening of the sub tank portion 131. The hole portion 133a is formed in the lid portion 133 in the vertical direction. The screw portion 133b is formed in an inner circumferential surface of the hole portion 133a. The screw portion 133b of the hole portion 133a is arranged so that it can be screwed to the screw portion 132c of the rod portion 132a. This allows the piston portion 132 including the rod portion 132a to be moved vertically with respect to the lid portion 133 including the hole portion 133a. The adjusting screw portion 134 is provided so as to cover an upper side of the sub tank portion 131 and an upper part of the outer surface of the sub tank portion 131. The adjusting screw portion 134 is fixed to an upper end part 132d of the rod portion 132a. The rod portion 132a is arranged to rotate in accordance with a rotation of the adjusting screw portion 134.

In the first to fourth embodiments, an example is described in which the convex portion 21a of the piston portion 21 is held between the lower end part of the rod portion 20 and the flange portion 36a of the lid body 36, and thereby, the piston portion 21 is fixed to the rod portion 20. The invention, however, is not limited to the above. It may be possible to provide snap rings 145 and 146 respectively in an upper end part and a lower end part of a piston portion 141 and to engage the respective snap rings 145 and 146 with engaging grooves 140a and 140b of an outer circumferential surface of a rod portion 140, respectively, to fix the piston portion 141 to the rod portion 140 so as not to be moved in a direction of a slide of the piston portion 141.

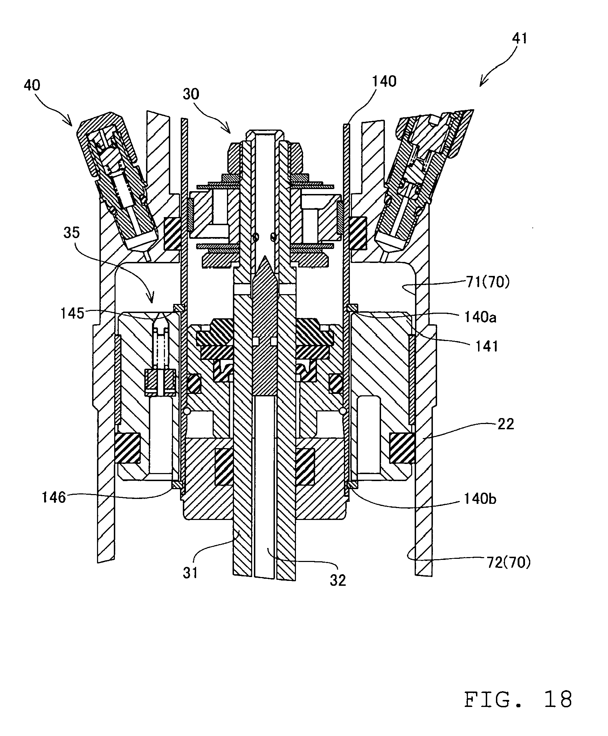

In an example structure of mounting the piston portion 141 to the rod portion 140 in accordance with a second modification of the first to fourth embodiments, the engaging groove 140a is provided in a part of the rod portion 140 to which the piston portion 141 is mounted, the part corresponding to an upper end surface of the piston portion 141, as shown in Fig. 18. The rod portion 140 is an example of a "shaft portion". The piston portion 141 is an example of a "first piston portion". The engaging groove 140b is mounted to a part of the rod portion 140 to which the piston portion 141 is mounted, the part corresponding to a lower end surface of the piston portion 141. The snap rings 145 and 146 are engaged with the engaging grooves 140a and 140b, respectively. The snap ring 145 is mounted to the rod portion 140 so that urging the snap ring 145 in a direction of groove bottoms of the engaging grooves 140a and 140b would allow the snap ring 145 to be prevented from coming off from the engaging groove 140a and 140b. The piston 141 is provided between a lower surface of the snap ring 145 provided in the engaging groove 140a and an upper surface of the snap ring 146 provided in the engaging groove 140b under a condition that an inner circumferential surface of the piston portion 141 is inserted in an outer circumferential surface of the rod portion 140.

The snap rings 145 and 146 thus allow the piston portion 141 to be prevented from moving upward and downward with respect to the rod portion 140, so that the piston portion 141 can be prevented from being unstable with respect to the rod portion 140 while the piston portion 141 can be mounted to the rod portion 140. Further, the snap rings 145 and 146 are mounted to the engaging grooves 140a and 140b of the rod portion 140, respectively, so as to be able to prevent the snap rings 145 and 146 from coming off. This allows the piston portion 141 to be prevented from coming off from the rod portion 140. Description of the Reference Numerals and Signs
1: MOTORCYCLE (VEHICLE)
2: HEAD PIPE (BODY)
3: MAIN FRAME (BODY)
4: PIVOT SHAFT HOLDING MEMBER (BODY)
5: CONNECTING MEMBER (BODY)
15: REAR WHEEL (WHEEL)
16: REAR SUSPENSION (SUSPENSION UNIT)
20, 140: ROD PORTION (SHAFT PORTION)
21, 141: PISTON PORTION (FIRST PISTON PORTION)
21b: END PART
22: CYLINDER PORTION (FIRST CYLINDER PORTION)
22c: OUTER CIRCUMFERENTIAL SURFACE
22d, 22g: SCREW PORTION (SECOND SCREW PORTION)
22e, 22h, 22i, 89a, 119a: CONNECTION HOLE
27: OIL CHAMBER
28: PISTON PORTION (SECOND PISTON PORTION)
30: ATTENUATION MECHANISM PORTION
35: AIR ADJUSTING VALVE (THIRD AIR PRESSURE ADJUSTING VALVE)
36: LID BODY (MOUNTING MEMBER)
36b: END PART
40: CHECK VALVE (FIRST AIR PRESSURE ADJUSTING VALVE)
41: RELIEF VALVE (SECOND AIR PRESSURE ADJUSTING VALVE)
42, 100: OUTER CYLINDER PORTION (SECOND CYLINDER PORTION)
42a, 100a: INNER CIRCUMFERENTIAL SURFACE
44, 102: VOLUME ADJUSTING MEMBER (VOLUME ADJUSTING PORTION)
44a, 102a: INNER CIRCUMFERENTIAL SURFACE
44b, 102b: SCREW PORTION (FIRST SCREW PORTION)
71: UPPER GAS CHAMBER (FIRST GAS CHAMBER)
72: LOWER GAS CHAMBER (SECOND GAS CHAMBER)
73, 75: OUTER GAS CHAMBER (THIRD GAS CHAMBER)
74, 76: OUTER GAS CHAMBER (FOURTH GAS CHAMBER)
81, 111, 131: SUB TANK PORTION (SECOND CYLINDER PORTION)
85, 115: MOUNTING PORTION
85a, 115a: GROOVE PART (FIRST GROOVE PART)
85b, 115b: SEALING GROOVE (SECOND GROOVE PART)
90, 120: SEALING MEMBER

## Claims

1. A vehicle comprising:
a body;
a wheel; and
a suspension unit provided between the body and the wheel for absorbing a shock in relative movement of the body and the wheel,
wherein the suspension unit includes a first cylinder portion filled with air and a second cylinder portion directly mounted to the first cylinder portion, the second cylinder portion being arranged so that the volume thereof is adjustable.

2. The vehicle according to Claim 1, wherein
the suspension unit further includes: a first piston portion provided so as to divide the first cylinder portion into a first gas chamber and a second gas chamber; and a connection hole provided in at least any one of the first cylinder portion and the second cylinder portion, and
any one of the first gas chamber and the second gas chamber of the first cylinder portion is directly connected to the second cylinder portion through the connection hole.

3. The vehicle according to Claim 2, wherein the suspension unit further includes: a first air pressure adjusting valve arranged so as to absorb air from the outside of the suspension unit into the first gas chamber by extension or contraction of the suspension unit; and a second air pressure adjusting valve arranged to exhaust air from the first gas chamber to the outside of the suspension unit.

4. The vehicle according to Claim 2 or Claim 3, wherein the second cylinder portion includes a third gas chamber formed into the shape of a cylinder so as to cover an outer circumferential surface of the first cylinder portion, the third gas chamber being provided between the outer circumferential surface of the first cylinder portion and an inner circumferential surface of the second cylinder portion, and
the third gas chamber is arranged to be connected to any one of the first gas chamber and the second gas chamber through the connection hole.

5. The vehicle according to Claim 4, wherein the first cylinder portion and the second cylinder portion are arranged in the shape of concentric circles.

6. The vehicle according to Claim 4 or Claim 5, wherein the suspension unit further includes a volume adjusting portion provided between the inner circumferential surface of the second cylinder portion and the outer circumferential surface of the first cylinder portion for adjusting the volume of the third gas chamber.

7. The vehicle according to Claim 6, wherein
a first screw portion is formed in an inner circumferential surface of the volume adjusting portion and
a second screw portion capable of screwing to the first screwing portion is formed in the outer circumferential surface of the first cylinder portion.

8. The vehicle according to any one of Claims 2 to 7, wherein
the second cylinder portion is provided adjacently to the first cylinder portion and includes inside a fourth gas chamber, and
the fourth gas chamber is arranged to be connected to any one of the first gas chamber and the second gas chamber through the connection hole.

9. The vehicle according to Claim 8, wherein
the second cylinder portion includes a mounting portion provided so as to annularly cover the outer circumferential surface of the first cylinder portion and a first groove part annularly formed in an inner circumferential surface of the mounting portion, and
the connection hole is formed in a part of the first cylinder portion, the part corresponding to any one of the first gas chamber and the second gas chamber, and a part of the first groove part of the second cylinder portion, the part corresponding to the fourth gas chamber.

10. The vehicle according to Claim 9, wherein
the second cylinder portion further includes a second groove part adjacent to the first groove part of the inner circumferential surface of the mounting portion, the second groove part extending substantially parallel to the first groove part, and
the suspension unit further includes a sealing member provided in the second groove part for sealing a space between the outer circumferential surface of the first cylinder portion and the second cylinder portion.

11. The vehicle according to any one of Claims 2 to 10, wherein the first piston portion is mounted on a second gas chamber side in the suspension unit,
the suspension unit further includes a shaft portion provided slidably with respect to the first cylinder portion and a mounting member for mounting the first piston portion to the shaft portion, and
an end part of the first piston portion on the second gas chamber side is arranged to be provided closer to the first gas chamber than an end part of the mounting member on the second gas chamber side.

12. The vehicle according to Claim 11, wherein
the shaft portion includes an oil chamber filled with oil, and
the suspension unit further includes:
a second piston portion provided in the oil chamber of the shaft portion; and
an attenuation mechanism portion for generating attenuation force of the suspension unit by a movement of the second piston portion in the oil chamber of the shaft portion in extension or contraction of the suspension unit.

13. The vehicle according to any one of Claims 2 to 12, wherein
the suspension unit further includes a third air pressure adjusting valve for supplying the second gas chamber with air from the first gas chamber, and
the second gas chamber is arranged to be supplied with air from the first gas chamber through the third air pressure adjusting valve in the case that expansion of the air in the second gas chamber causes more reduction in air pressure of the second gas chamber than the first gas chamber in extension of the suspension unit.

14. The vehicle according to any one of the preceding Claims, wherein the suspension unit is a rear suspension.
